# EUROPÄISCHE PATENTSCHRIFT

(11) **EP 0 852 301 B1**
(45) Veröffentlichungstag und Bekanntmachung des Hinweises auf die Patenterteilung: **16.08.2000**
(21) Anmeldenummer: 97122675.8
(22) Anmeldetag: 22.12.1997
(51) Int. Cl.: F16D 65/56

(54) **Scheibenbremse**
Disc brake
Frein à disque

(30) Priorität: 02.01.1997 DE 19700039
(43) Veröffentlichungstag der Anmeldung: 08.07.1998
(73) Patentinhaber: WABCO Perrot Bremsen GmbH, 68229 Mannheim (DE)
(72) Erfinder: Antony, Paul, Dipl.-Ing., 67550 Worms (DE)
(74) Vertreter: Patentanwälte Leinweber & Zimmermann

(56) Entgegenhaltungen:
- WO-A-97/01044
- DE-A- 2 036 722
- GB-A- 2 013 804
- US-A- 3 489 253
- US-A- 4 418 801

## Beschreibung

Die Erfindung betrifft eine Scheibenbremse nach dem Oberbegriff des Anspruchs 1.

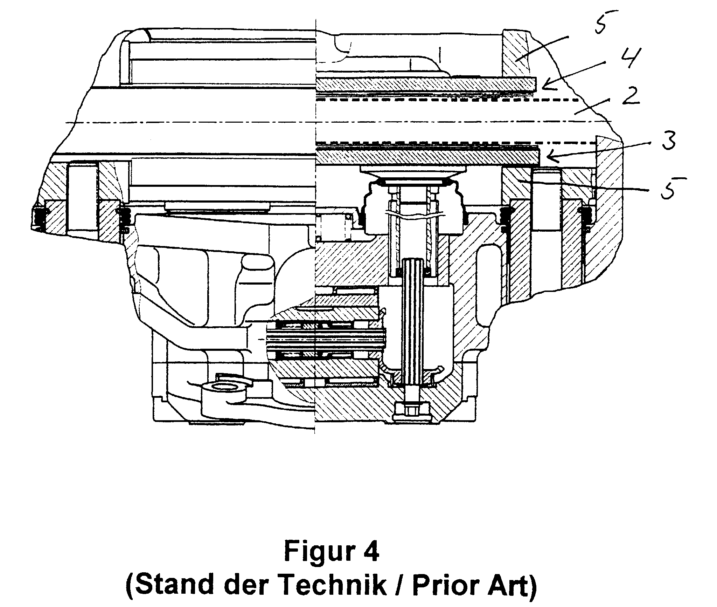

Eine Scheibenbremse ist bekannt. Sie ist beispielsweise in der Deutschen Patentanmeldung 196 36 942 vom 11. September 1996 beschrieben. Sie ist schematisch in Figur 4 gezeigt. Zwei Bremsbacken 3 und 4, die sich jeweils aus einem Bremsbelag und einem Bremsbelagträger zusammensetzen, sind im Normalzustand in einem Bremsenträger 5 verschieblich geführt und gehalten. Der Bremsenträger 5 dient zur Aufnahme des Bremsmoments. Eine Nachstelleinrichtung zum Ausgleich von Verschleiß einer Bremsscheibe 2 und/oder der Bremsbeläge ist mit dem Bezugszeichen 14 bezeichnet.

Im allgemeinen werden bei Bremsen der vorstehend beschriebenen Art aus Gründen der Wirtschaftlichkeit sowohl die Bremsbeläge als auch die Bremsscheibe bis an ihre Verschleißgrenze abgenutzt, bevor sie gegen neue Teile ausgewechselt werden. Erst wenn die maximal zulässige Bremsbelagverschleißgrenze erreicht ist, erfolgt ein Austausch der Bremsbacken.

Aus Gründen der Betriebssicherheit bei Bremsen der eingangs beschriebenen Art hat eine Kontrolle der augenblicklichen Bremsscheibendicke und der Restbelagdicke zu erfolgen. Wird nämlich die zulässige Bremsscheibendicke und Bremsbelagdicke durch Wegfall der Kontrollmessung oder durch Vernachlässigung ihrer Verschleißwerte während des Fahrbetriebs unterschritten, besteht die Gefahr, daß ein nahe seiner eigenen Verschleißgrenze liegender Bremsbacken von der Nachstelleinrichtung so weit in Richtung Bremsscheibe bewegt wird, daß die Bremsbackenführung bzw. -abstützung zur Aufnahme des Bremsmoments in dem Bremsenträger verloren geht und der Bremsbacken bei einem Bremsvorgang aus seiner Halterung gerissen wird.

Ein Grund dafür kann darin liegen, daß die Bremsscheibe übermäßig verschlissen ist, so daß sich ihr Abstand von dem Bremsenträger vergrößert. Die Nachstelleinrichtung wird nämlich in einem solchen Fall den Bremsbacken entsprechend der Abstandvergrößerung aus dem Bremsenträger herausschieben. Schiebt sie ihn aber zu weit heraus, geht die Halterung verloren und der Bremsenträger kann das Bremsmoment nicht mehr aufnehmen, so daß der Bremsbacken aus dem Bremsenträger herausgerissen wird. Dieser Zustand ist in Figur 4 gezeigt. Man erkennt deutlich, daß die Bremsbacken 3 und 4 aus dem Bremsenträger 5 herausgedrückt und von dem wirksamen Bremsmoment (in der Zeichnung nach rechts) verschoben worden sind. Der Verlust des Bremsbackens führt dann zu einem schlagartigen Totalausfall der Bremse.

Der Erfindung liegt die Aufgabe zugrunde, einen plötzlichen Totalausfall der Bremse für den Fall zu vermeiden, daß die maximal zulässige Verschleißgrenze der Bremsscheibe und/oder des Bremsbelags überschritten wird.

Erfindungsgemäß wird die gestellte Aufgabe mit einer Scheibenbremse nach Anspruch 1 gelöst.

Mit anderen Worten wird der Bremsbacken oder ein damit gekoppeltes Nachstellteil, das zum Ausgleich von Verschleiß in Richtung Bremsscheibe verschiebbar ist, durch die genannte Begrenzungseinrichtung an einer über das Grenzmaß hinausgehenden Verschiebung gehindert, weshalb die genannte Einrichtung auch als Grenzwertsperreinrichtupg bezeichnet werden kann. Wegen der Grenzwertsperreinrichtung kann der Bremsbacken nicht beliebig weit in Richtung Bremsscheibe nachgestellt werden. Zwar wird bei Erreichen des Grenzwertes dem Fahrzeugführer ein Abnehmen der Bremsleistung, das sich in Folge eines weiteren Verschleißes in einer langsamen, kontinuierlich abnehmenden Verzögerung (Verringerung der Bremsmomente) bemerkbar macht, entweder gefühlsmäßig bewußt, oder es wird ihm von einer Bremsenelektronik angezeigt, daß die sofortige Stillegung des Fahrzeugs zu erfolgen hat, jedoch kann ein schlagartiger Totalausfall der Bremse nicht eintreten, weil der Bremsbacken nicht über eine vorbestimmte Grenze hinaus verschoben werden und infolgedessen nicht mangels Aufnahme des Bremsmoments durch den Bremsenträger verloren gehen kann.

Die US-A-3,489,253 zeigt eine Scheibenbremse, bei der der Bremsbacken nicht an der Druckspindel, sondern an einer Hülse angebracht ist, in die die Druckspindel über eine Zwischenhülse eingeschraubt ist. Zur Begrenzung des Verschiebungsmaßes ist dabei sowohl an der Druckspindel als auch an der Zwischenhülse jeweils ein Stift vorgesehen, der bei Erreichen der maximal vorgegebenen Verschiebungsgrenze an einem innen in der Hülse bzw. der Zwischenhülse liegenden Anschlag anschlägt.

Der erste Anschlag kann von der Mantelfläche eines Stiftes in der Druckspindel gebildet sein.

Als besonders einfach bevorzugt die Erfindung eine Ausgestaltung, bei der die Nachstelleinrichtung eine Profilwelle aufweist, die in eine drehfest mit der Druckspindel gekoppelte Profilscheibe hineinragt, wobei der erste Anschlag an der Profilscheibe ausgebildet ist.

Dabei kann die Profilscheibe an der bremsscheibenabgewandten Stirnfläche der Druckspindel angeordnet sein und größere radiale Außenabmessungen als eine zum Einschrauben der Druckspindel dienende Gewindeöffnung in dem Druckstück haben. Diese Ausgestaltung trägt zur weiteren Vereinfachung der Gesamtkonstruktion bei.

Der zweite Anschlag ist bevorzugt außerhalb des Gewindebereiches der Gewindeöffnung angeordnet. Dadurch ist ein leichtes Lösen nach Wirksamwerden der Grenzwertsperreinrichtung möglich.

Nachstehend ist die Erfindung anhand eines bevorzugten Ausführungsbeispiels unter Bezugnahme auf die beiliegende Zeichnung mit weiteren Einzelheiten näher erläutert.

Dabei zeigen
Fig. 1 eine senkrecht zur Bremsscheibenebene geschnittene Ansicht einer Scheibenbremse,
Fig. 2 eine ebenfalls senkrecht zur Bremsscheibenebene, jedoch auch senkrecht zu der Ansicht nach Figur 1 geschnittene Ansicht der Scheibenbremse nach Figur 1,
Fig. 3 die gleiche Ansicht wie Figur 1, jedoch mit wirksamer Grenzwertsperreinrichtung für die Nachstellvorrichtung und
Fig. 4 die gleiche Ansicht wie Figur 2, jedoch von einer herkömmlichen Backenbremse.

Bei der in den Figuren gezeigten Scheibenbremse handelt es sich um eine Gleitsattelscheibenbremse. Sie weist einen Bremssattel 1 auf, der in üblicher Weise mit seinen beiden Schenkeln eine Bremsscheibe 2 übergreift. Beidseitig der Bremsscheibe 2 sind Bremsbacken 3, 4 in einem Bremsenträger 5 bzw. im Bremssattel 1 geführt und abgestützt. Die Bremsbacken 3 und 4 setzen sich jeweils aus einem Bremsbelagträger 3.1 bzw. 4.1 und einem Bremsbelag 3.2 bzw. 4.2 zusammen. Der Bremssattel 1 ist mittels (nicht gezeigter) Führungsmittel quer zur Bremsscheibe 2 verschieblich gelagert. Er ist einseitig mit einer Zuspannvorrichtung 6 ausgestattet. Die Zuspannvorrichtung 6 weist einen Schwenkhebel 7 auf, dessen Schwenkachse A im wesentlichen parallel zu einer Bremsscheibenebene 8 der Bremsscheibe 2 liegt. Der Bremshebel 7 ist radial an einer Zuspannwelle 9 angebracht. Der Bremshebel 7 und die Zuspannwelle 9 liegen innerhalb des Bremssattels 1.

Die Zuspannwelle 9 erstreckt sich entlang der Schwenkachse A und weist eine Nockenkontur auf, die bei einem Verdrehen um ihre Längsachse zu einer Relativverschiebung des Bremssattels 1 und des Bremsbackens 3 in Axialrichtung der Bremsscheibe 2 führt. Dabei wird die Kraft von der Zuspannwelle 9 über vorgelagerte Druckspindeln 10, 11 auf den Bremsbacken 3 übertragen.

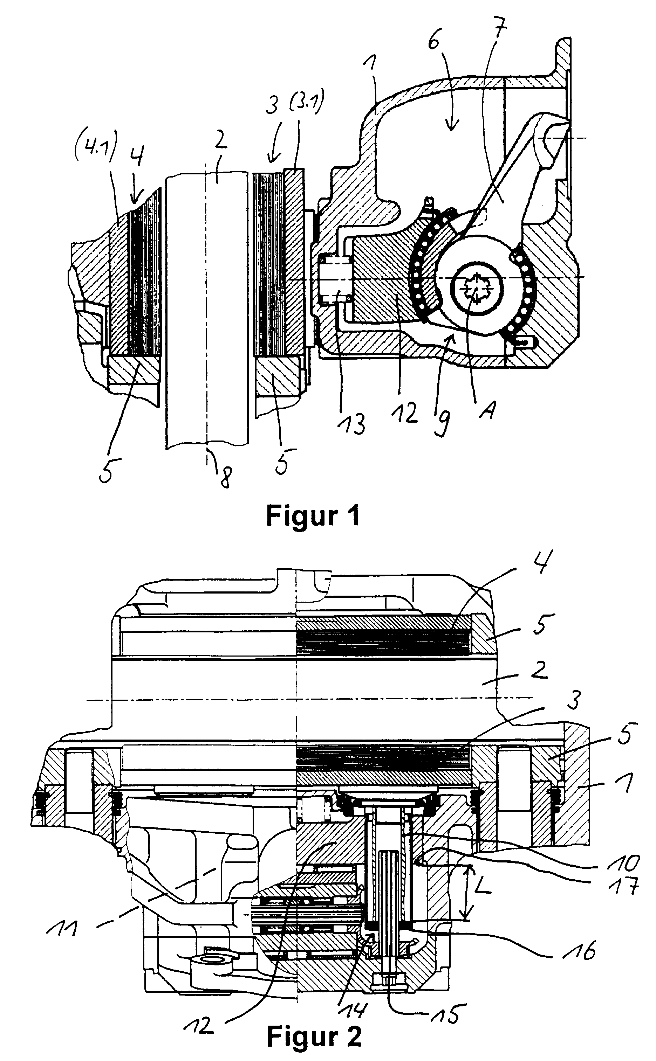

Gemäß Figur 2 sind zwei Druckspindeln 10, 11 vorgesehen, die in einem Druckstück 12 angeordnet sind.

Die Zuspannvorrichtung 6 weist bremsscheibenseitig mindestens eine Druckfeder 13 auf, die gegenüber dem Bremssattel 1 abgestützt ist, um die Zuspannvorrichtung 6 mit dem Schwenkhebel 7 in Richtung einer Ruhelage vorzuspannen.

Zum Ausgleich des Belagverschleißes ist eine Nachstelleinrichtung 14 vorgesehen, die einerseits mit der Zuspannwelle 9 und andererseits mit den Druckspindeln 10, 11 gekoppelt ist, um die Drehbewegung der Zuspannwelle 9 auf die Druckspindeln 10, 11 im Sinne eines Herausschraubens aus dem als Trageteil dienenden Druckstück 12 in Richtung Bremsscheibe 2 zu übertragen. Die Nachstelleinrichtung 14 beinhaltet eine kraftabhängige Einwegkupplung, die ein übermäßiges Nachstellen verhindert. Eine detaillierte Beschreibung der Nachstelleinrichtung ist beispielsweise der DE-A-43 07 017 zu entnehmen.

Wenngleich in den Figuren zwei Druckspindeln 10, 11 gezeigt sind, wird im folgenden aus Gründen der Vereinfachung die Grenzwertsperreinrichtung nur anhand des Zusammenspiels der Nachstelleinrichtung 14 mit der Druckspindel 10 erläutert.

Die Nachstelleinrichtung 14 weist ein profiliertes Abtriebselement 15 auf, das sich in die Druckspindel 10 erstreckt. Zur Drehkopplung dient eine am Ende der Druckspindel 10 befestigte Profilscheibe 16.

Die Grenzwertsperreinrichtung zur Begrenzung der Ausschraublänge der Druckspindel 10 aus dem Druckstück 12 in Richtung Bremsscheibe 2 wird durch die Profilscheibe 16 und eine Anschlagfläche 17 des als Trageteil dienenden Druckstücks 12 gebildet. Die als Sperrscheibe dienende Profilscheibe 16 weist dabei in Radialrichtung einen größeren Außenumfang als der Gewindegrund der Druckspindel 10 auf und ist anfangs, d.h. bei noch nicht verschlissener Bremse im Abstand L von der Anschlagfläche 17 an der Druckspindel 10 befestigt. Die Anschlagfläche 17 ist dabei an der der Bremsscheibe 2 abgewandten Stirnfläche des Druckstücks 12 ausgebildet.

Neben der Profilwelle 15 und der Profilscheibe 16 sind selbstverständlich auch andere Kopplungsmechanismen der Nachstelleinrichtung 14 mit der Druckspindel 10 denkbar. Insbesondere sind auch solche Kopplungen denkbar, bei denen keine der Profilscheibe 16 entsprechenden Elemente verwendet werden. In einem solchen Fall kann die Grenzwertsperreinrichtung auch von einem (in den Figuren nicht gezeigten) Stift gebildet sein, der beispielsweise in die Welle 15 eingesteckt wird und bei Erreichen des Grenzwerts an dem Druckstück 12 anschlägt, so daß ein weiteres Herausdrehen der Druckspindel 10 aus dem Druckstück 12 nicht möglich ist.

Die Anschlagfläche 17 am Druckstück 12 ist bei dem dargestellten Ausführungsbeispiel als Ringfläche ausgebildet und liegt außerhalb des Gewindebereichs des Druckstücks 12, so daß ein leichtes Lösen der wirksam gewordenen Grenzwertsperreinrichtung wieder möglich ist.

Da die Bremsen- und Nachstellfunktion allgemein bekannt und insbesondere in der DE-A-43 07 017 beschrieben ist, soll an dieser Stelle lediglich die Funktionsweise der oben erläuterten Grenzwertsperreinrichtung beschrieben werden. Anfangs, d.h. bei unverschlissenen Elementen 2 bis 4 hat die Profilscheibe 16 von dem Druckstück 12 bzw. der Anschlagfläche 17 einen Abstand L. Mit znnehmendem Verschleiß der Bremsscheibe 2 sowie der Bremsbeläge 3, 4 wird über die Nachstelleinrichtung 14 zur Aufrechterhaltung des Bremsenlüftspiels die Druckspindel 10 aus dem Druckstück 12 herausgeschraubt, wodurch sich kontinuierlich der Abstand L der Profilscheibe 16 von der Anschlagfläche 17 verringert und die Bremsbacken 3, 4 in Axialrichtung der Bremsscheibe 2 innerhalb der Führungsflächen des Bremsenträgers 5 verschoben werden.

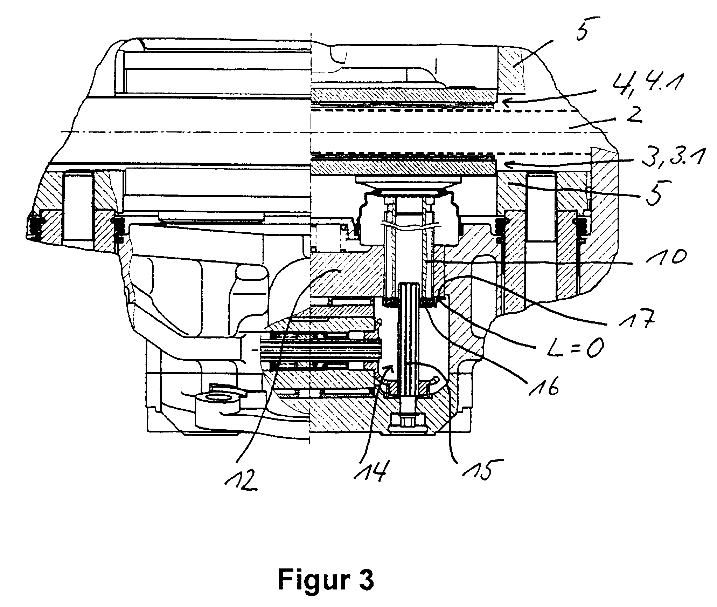

Wird das Grenzmaß des maximal zulässigen Verschleißes (siehe gestrichelte Darstellung in Fig. 3) erreicht, schlägt beim Abstand L = 0 die Profilscheibe 16 gegen die Anschlagfläche 17 des Druckstücks 12. Dadurch ist die Ausschraublänge der Druckspindel 10 begrenzt. Da in dieser Position die Bremsbelagträger 3.1, 4.1 noch ausreichend tief in dem Bremsenträger 5 stecken (in dem gezeigten Ausführungsbeispiel noch zu ca. 20 % der Belagträgerdicke), ist eine sichere Führung durch den Bremsenträger 5 noch gegeben und der Bremsenträger 5 kann das Bremsmoment noch zuverlässig aufnehmen, ohne daß die Gefahr bestünde, daß die Bremsbacken aus ihrer Führung herausgerissen werden könnten.

Obwohl die Erfindung anhand einer Zuspannvorrichtung mit einer Traverse mit zwei Druckspindeln erläutert worden ist, kann das erfindungsgemäße Prinzip selbstverständlich auch auf andere Zuspannvorrichtungen und andere Nachstellausführungen übertragen werden, sofern dabei eine Grenzwertsperreinrichtung realisiert werden kann, die eine übermäßige Verschiebung des Bremsbackens zur Bremsscheibe hin verhindert.

Bei dem beschriebenen Ausführungsbeispiel bleibt die Schwenkachse des innerhalb des Bremssattels liegenden Bremshebels während der Zuspannung stehen. Die Erfindung ist aber auch anwendbar auf Bremsen, bei denen die Schwenkachse des Bremshebels ihre Lage mit zunehmender Zuspannung ändert oder bei denen der Bremshebel nicht innerhalb des Bremssattels liegt.

Nach Figur 2 sind zwei Druckspindeln 10, 11 vorgesehen, die in einem Druckstück 12 angeordnet sind. Auch hier gilt, daß die Erfindung nicht auf dieses Ausführungsbeispiel beschränkt ist. Vielmehr ist sie auch anwendbar bei einer mittig im Druckstück angeordneten einzelnen Spindel, wie auch bei Ein- oder Zwei-Spindelbremsen, bei denen gar kein Druckstück vorgesehen ist, weil die nachstellbaren Spindeln im Bremssattel oder in Druckhülsen gelagert sind.

## Patentansprüche

1. Scheibenbremse mit mindestens einem in einer Halterung (5) zur Aufnahme eines Bremsmoments geführten Bremsbacken (3, 4), der zum Bremsen eines Rades gegen eine mit dem Rad drehende Bremsscheibe (2) gedrückt wird, einer Nachstelleinrichtung (14), die dazu dient, den Bremsbacken (3, 4) in Richtung Bremsscheibe (2) zu verschieben, um einen von der Bremsreibung herrührenden Verschleiß des Bremsbackens (3.2, 4.2) und/oder der Bremsscheibe (2) zumindest teilweise auszugleichen, und mit
einer Einrichtung (16, 17) zum Begrenzen des Maßes der Verschiebung des Bremsbackens (3, 4) durch die Nachstelleinrichtung (14),
dadurch gekennzeichnet, daß
die Nachstelleinrichtung (14) mindestens eine Druckspindel (10, 11) aufweist, die in ein zum Bremsen in Richtung Bremsscheibe (2) verschiebliches Druckstück (12) eingeschraubt ist und an deren bremsscheibenzugewandtem Ende sich der Bremsbacken (3) befindet, wobei die Einrichtung zum Begrenzen des Maßes der Verschiebung des Bremsbackens durch die Nachstelleinrichtung (14) einen ersten Anschlag (16) aufweist, der auf der bremsscheibenabgewandten Seite des Druckstücks (12) liegt und der bei Erreichen der Verschiebemaßgrenze an einem zweiten Anschlag (17) an dem Druckstück (12) anschlägt.

2. Scheibenbremse nach Anspruch 1, dadurch gekennzeichnet, daß sie eine Gleitsattelscheibenbremse ist.

3. Scheibenbremse nach Anspruch 1 oder 2, dadurch gekennzeichnet, daß der erste Anschlag von der Mantelfläche eines Stiftes in der Druckspindel (10, 11) gebildet ist.

4. Scheibenbremse nach einem der vorangehenden Ansprüche, dadurch gekennzeichnet, daß die Nachstelleinrichtung (14) eine Profilwelle (15) aufweist, die in eine drehfest mit der Druckspindel (10, 11) gekoppelte Profilscheibe (16) hineinragt, wobei der erste Anschlag an der Profilscheibe (16) ausgebildet ist.

5. Scheibenbremse nach Anspruch 4, dadurch gekennzeichnet, daß die Profilscheibe (16) an der bremsscheibenabgewandten Stirnfläche der Druckspindel (10, 11) angeordnet ist und größere radiale Außenabmessungen als eine zum Einschrauben der Druckspindel (10, 11) dienende Gewindeöffnung in dem Druckstück (12) hat.

6. Scheibenbremse nach einem der vorangehenden Ansprüche, dadurch gekennzeichnet, daß der zweite Anschlag (17) außerhalb des Gewindebereichs der Gewindeöffnung liegt.

## Claims

1. Disc Brake with a minimum of one cavity (5) to accept a brake torque guided brake pad / backing plate assembly (3, 4) which clamps against a rotating brake disc (2) to stop the wheel from turning, an adjuster unit (14) which serves to move the brake pad (3, 4) towards the brake disc (2) compensating for brake pad (3, 4) and brake disc (2) wear and
a device (16, 17) to limit travel of the brake pad (3, 4) via the adjuster unit (14)
characterised by
the adjuster unit (14) being equipped with a minimum of one pressure spindle (10, 11), threaded into a pressure plate (12) and contacting the brake pad (3) on the opposite side, whereby the travel limiting device via the adjuster unit (14) incorporates an initial abutment (16) located on the pressure plate (12) opposite of the brake disc and which, upon reaching the maximum wear limit, makes contact with and anchors itself against the secondary abutment (17) of the pressure plate (12).

2. Disc Brake according to claim 1, characterised by being a floating caliper disc brake.

3. Disc Brake according to claim 1 or 2, characterised by the initial abutment being the outside surface of a pin within the pressure spindle (10, 11).

4. Disc Brake according to one of the above claims, characterised by the adjuster unit (14) incorporating a profile shaft (15)connected to the pressure spindle (10, 11) which extends into a profile disc (16), whereby the initial abutment has been integrated in the profile disc (16).

5. Disc brake according to claim 4, characterised by the profile disc (16) being located on the face of the pressure spindle (10, 11) on the opposite side of the brake disc and having larger radial dimensions than a threaded opening in the pressure plate (12) used to accept the pressure spindle.

6. Disc Brake according to one of the above claims, characterised by the secondary abutment (17) being located outside the thread area of the threaded hole.

## Revendications

1. Frein à disque comportant au moins un segment de frein (3, 4) guidé dans un logement (5) pour supporter un couple de freinage, qui, pour freiner la roue, est mis en pression contre un disque de frein (2) tournant avec la roue, et un dispositif de rattrapage (14) servant à déplacer le segment de frein (3, 4) en direction du disque de frein (2) pour compenser au moins en partie une usure provenant du frottement du segment de frein (3.2, 4.2) et/ou du disque de frein (2), et avec
un dispositif (16, 17) permettant de limiter le déplacement du segment de frein (3, 4) provoqué par le dispositif de rattrapage,
caractérisé en ce que
le dispositif de rattrapage (14) comporte au moins un piston fileté (10, il) qui est vissé dans une pièce de poussée (12) se déplaçant, pour assurer le freinage, en direction du disque de frein (2) et au bout duquel est situé, du côté du disque de frein, le segment de frein (3), le dispositif de limitation du déplacement du segment de frein provoqué par le dispositif de rattrapage (14) présentant une première butée (16) qui se trouve du côté opposé au disque de frein par rapport à la pièce de poussée (12) et qui vient s'arrêter sur une seconde butée (17) au niveau de la pièce de poussée (12) lorsque la cote limite du déplacement est atteinte.

2. Frein à disque selon la revendication 1, caractérisé en ce qu'il s'agit d'un frein à disque à étrier coulissant.

3. Frein à disque selon l'une des revendications 1 ou 2, caractérisé en ce que la première butée est formée par l'enveloppe d'un ergot dans le piston fileté (10, 11).

4. Frein à disque selon l'une quelconque des revendications précédentes, caractérisé en ce que le dispositif de rattrapage (14) comporte un axe cannelé (15) qui est engagé à travers une rondelle profilée (16) couplée en rotation avec le piston fileté (10, 11), la première butée étant formé au niveau de la rondelle profilée (16).

5. Frein à disque selon la revendication 4, caractérisé en ce que la rondelle profilée (16) est placée à l'extrémité du piston fileté du côté opposé au disque de frein et possède des dimensions extérieures radiales supérieures au diamètre du trou taraudé servant à visser le piston fileté (10, 11) dans la pièce de poussée (12).

6. Frein à disque selon l'une quelconque des revendications précédentes, caractérisé en ce que la seconde butée (17) est située en dehors de la zone filetée.
